# EUROPEAN PATENT APPLICATION

(11) **EP 3 944 172 A1**
(43) Date of publication of application: **26.01.2022**
(21) Application number: 19920287.0
(22) Date of filing: 22.07.2019
(51) Int. Cl.: G06Q 20/16

(54) **VALUE TRANSMISSION SYSTEM AND METHOD BASED ON DNS DOMAIN NAME SYSTEM, AND DNS SERVER**

(30) Priority: 21.03.2019 CN 201910217445
(71) Applicant: Shanghai Finmail Network Technology Co., Ltd., China (Shanghai) Pilot Free Trade Zone Shanghai 201210 (CN)
(72) Inventor: ZHANG, Haimin, Shanghai 200442 (CN)
(74) Representative: Argyma
(86) International application number: PCT/CN2019/097046
(87) International publication number: WO 2020/186673

(57) **Abstract**

Disclosed is a value transfer system based on the Domain Name System (DNS) including: a fund management server, leveraging network protocols to transfer value that includes, but not limited to, digital currency and electronic currency; a DNS server, configured with a resource record that has a mapping relationship to the IP address of a fund management server, wherein when a client queries the resource record through the DNS server, the DNS server resolves the resource record to obtain the IP address of the fund management server and feeds the IP address back to the client so that the client interacts with the fund management server according to the IP address to perform the corresponding value transfer. A user can perform cross-platform remittance directly via a wallet address or an e-mail address related to a domain name, thereby greatly improving the reliability and efficiency of remittances/receipts. Since each of the domain names has WHOIS records containing real information and data of the domain name owners, registrars, and the relevant personnel, real-name authentication can be achieved through remittances by wallet or email addresses bound to the domain names, thereby obtain necessary legal support and supervision.

## Description

### BACKGROUND OF THE INVENTION

### Field of the Invention

The present invention relates to the technical field of value transfer, in particular, to a value transfer system based on the domain name system (DNS), a method therefor, and a DNS server.

### Description of the Prior Art

With the popularity of the Internet, DNS resolution plays an increasingly important role in network transactions, especially in the resolution of e-mail addresses and the domain name. However, as an early-stage protocol, DNS resolution is still mainly aimed at information networks with a lack of support for emerging value networks, so that the Internet can only make half of the effects, which greatly limits the scope of application and the resulting business model.

On the other hand, the current development of blockchain and digital currencies (such as Bitcoin, etc.) is mainly conducted with reference to bank or third-party payments, which makes it difficult to obtain reliability and convenience in use due to a large number of irregular receipt/remittance addresses. At the same time, anonymity also makes it difficult for digital currencies to obtain the necessary legal support and regulation. Meanwhile, for most of the third-party payment systems, although e-mail addresses are used as the receipt/remittance accounts, such use is limited only within their own platform, making it difficult to achieve generality and consistency at the network level.

### SUMMARY OF THE INVENTION

The present invention provides a value transfer system based on the DNS domain name system, a method therefor, and a DNS server, so as to solve the problem of the network's being difficult to transfer value for users reliably and conveniently when the network is transferring information.

According to a first aspect, in an embodiment, a value transfer system based on the DNS domain name system is provided, including:
a fund management server, leveraging network protocols to transfer value that includes, but not limited to, digital currency and electronic currency;
a DNS server, configured with a resource record that has a mapping relationship to the IP address of the fund management server, wherein when a client queries the resource record through the DNS server, the DNS server resolves the resource record to obtain the IP address of the fund management server and feeds the IP address back to the client so that the client interacts with the fund management server according to the IP address to perform the corresponding value transfer.

According to a second aspect, in an embodiment, a value transfer method based on the DNS domain name system is provided, including steps of:
configuring a resource record related to a fund management server into a DNS server, wherein the fund management server leverages network protocols to transfer value that includes, but not limited to, digital currency and electronic currency; the resource record is a resource record that has a mapping relationship to the IP address of the fund management server;
receiving, by the DNS server, query requests for the resource record from a client;
resolving, by the DNS server, the resource record to the IP address of the fund management server and feeding the IP address back to the client if the resource record exists; and
performing, by the fund management server, interaction with the client for the corresponding value transfer according to requests from the client based on the IP address.

According to a third aspect, in an embodiment, a DNS server is provided, including:
a configuration module, used to configure a resource record related to a fund management server into a DNS server, wherein the resource record is a resource record that has a mapping relationship to the IP address of the fund management server;
a receiving module, used to obtain the query requests for the resource record of the fund management server from the client; and
a processing module, used to query whether there exists the corresponding resource record in a database or a buffer according to the query requests, and if yes, resolve the resource record to the IP address of the fund management server and feed the IP address back to the client.

According to a fourth aspect, in an embodiment, a remittance method by e-mail is provided, wherein the e-mail interface includes remittee information, remittance methods, amount and currency types;
the remittee information includes the following types:
wallet address of the remittee;
e-mail address of the remittee;
digital currency address of the remittee;
name corresponding to the digital currency address of the remittee;
account and service provider bound to the digital currency or the electronic currency of the remittee;
name corresponding to both the account and the service provider bound altogether to the digital currency or the electronic currency of the remittee;
the remittance method includes ordinary remittance method and/or DNS direct remittance method;
the type of currency is digital currency or/and electronic currency;
the remittance method by e-mail includes steps of:
   detecting whether the remittee information contains the wallet address of the remittee or the e-mail address of the remittee, wherein if yes, the remittance is performed in the DNS direct remittance method; if not, the remittance is performed in the ordinary remittance method.

According to the value transfer system of the above embodiments, the present application has the following beneficial effects:
1) By configuring the resource record that has the mapping relationship to the IP address of the fund management server into the DNS server, the DNS has a value-network-oriented functionality to transfer value for users reliably and conveniently.
2) With the consideration of the popularity of e-mails, the format of the resource record introduced by the present invention is close to the pattern of the MX resource record for e-mails, and a new wallet address whose format is close to an e-mail address is also introduced.
3) In order to solve the problem of interface inconsistency caused by a large number of existing third-party payments and digital currency protocols, the present invention introduces a unified interface protocol to the fund management server, and further extends related solutions (such as remittance mail).

Through the above value transfer system, a user may perform cross-platform remittance directly via a wallet address or an e-mail address related to a domain name without entering a complicated receipt address or account ID, thereby greatly improving the reliability and efficiency of remittances/receipts. On the other hand, since each of the domain names has WHOIS records containing real information and data of the domain name owners, registrars, and the relevant personnel, real-name authentication can be realized through remittances with wallets or email addresses bound to the domain names, thereby obtaining necessary legal support and supervision. Meanwhile, due to the introduction of privacy protection laws such as GDPR, WHOIS information related to domain names is generally not disclosed, and is only disclosed to relevant persons or institutions when necessary, such as being involved in judicial investigations; therefore, good privacy protection characteristic and limited anonymity may be obtained.

### BRIEF DESCRIPTION OF THE DRAWINGS

Fig. 1 is a diagram of the application of the value transfer system based on the DNS domain name system;
Fig. 2 is a system diagram of the value transfer system based on the DNS domain name system;
Fig. 3 is a flowchart of the value transfer method based on the DNS domain name system;
Fig. 4 is a schematic diagram of the DNS server.

### DESCRIPTION OF THE PREFERRED EMBODIMENTS

The present invention will be further explained in detail in combination with the drawings and specific implementation below.

Terms used in the present application are defined as below:
Digital/Crypto currency: decentralized digital currency or token, such as Bitcoin and Litecoin, etc., generally generated through "mining" work and hereinafter referred to as "digital currency".

Electronic currency: electronic conventional/legal currency or tokens and related payment services, such as PayPal and Alipay and their virtualized electronic currency.

Regular mail: ordinary e-mail.

Remittance mail: an email with a body having a remittance identifier, such as "Pay-To", i.e., Pay To, is sent while the remittance is synchronically performed.

Fund management server: transfer values leveraging network protocols, wherein both remittee and remitter can be settled independently based on the fund management server.

### DNS server: Domain Name System.

In the present application, by configuring the resource record for the fund management server into the DNS server, the IP address of the fund management server may be obtained by querying the resource record in the DNS server, and based on the IP address, the corresponding remittance operations may be completed through the interaction with the fund management server so as to realize value transfer. In other words, the DNS server further has the functionality of resolving domain names in the present application, and the fund management server further has the functionalities of remittance operations and querying in the present application.

### Embodiment one:

In order to better understand the present invention, application scenarios of the present invention will be first described in the present embodiment.

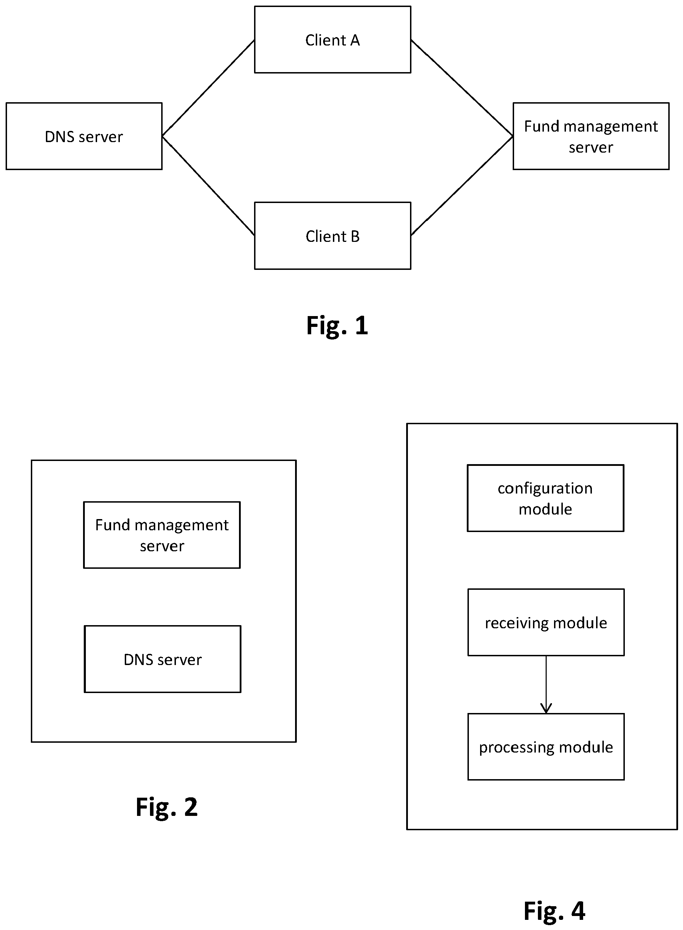

As shown in Fig. 1, when client A needs to perform remittance to client B, typically, client A needs to obtain the digital currency address or account information of client B before remittance; however, in the present application, by adding a resource record for the fund management server into a DNS server, client A may obtain the IP address of the fund management server by querying the resource record in the DNS server, and then client A accesses the fund management server through the IP address to interact with the fund management server to complete the remittance operations to client B through internal protocols of the fund management server, wherein during the entire process of the remittance operations, client A does not require the digital currency address or account information of client B, which greatly simplifies the operation flow of receipt and remittance for the clients.

Based on the above scenario, the present embodiment provides a value transfer system based on the Domain Name System (DNS), as shown in Fig. 2, which includes: a fund management server, wherein the fund management server leverages network protocols to transfer value that includes, but not limited to, digital currency and electronic currency; a DNS server, configured with a resource record that has a mapping relationship to the IP address of the fund management server, wherein when a client queries the resource record through the DNS server, the DNS server resolves the resource record to obtain the IP address of the fund management server and feeds the IP address back to the client so that the client interacts with the fund management server according to the IP address to perform the corresponding value transfer.

It should be understood that the sender client of value and the receiver client of value both are involved in the value transfer, while the sender client has a sender fund management server correspondingly, and the receiver client has a receiver fund management server correspondingly, so that the value transfer may be realized by the interaction between the sender fund management server and the receiver fund management server, wherein the sender client sends and queries the value through the sender fund management server, and the receiver client receives and queries the value through the receiver fund management server. Therefore, the clients in the present embodiment may be understood as the sender client or the receiver client correctly according to the specific descriptions of the functionalities to realize; correspondingly, the fund management servers in the present embodiment have double meanings, which means that the fund management server is understood as the sender fund management server for the sender client, and to the receiver client, the fund management server is understood as the receiver fund management server .

In real-world development, the sender client and the receiver client may be designed independently, i.e., the sender client and the sender fund management server are two devices that are independent from and interact with each other; or the sender fund management server and the sender client may be designed as an integral one, to form a comprehensive client with value sending functions. Similarly, the receiver client and the receiver fund management server may also be designed as two devices that are independent from and interact with each other, or as an integral one.

Since only the sender needs to query the resource record in the DNS server to obtain the IP address of the receiver fund management server, the resource record related to the fund management server configured in the DNS server is the IP address of the receiver fund management server. Correspondingly, when the client or server of the sender queries the resource record through the DNS server, the DNS server resolves the resource record to obtain the IP address of the receiver fund management server and feeds the IP address back to the client or server of the sender, so that the sender fund management server interacts with the receiver fund management server according to the IP address to perform value transfer accordingly; in other words, the value transfer is actually performed between the sender fund management server and the receiver fund management server, while the DNS server only resolves the resource record to obtain the IP address of the receiver fund management server. Therefore, without explanations, the client accessing the DNS server is considered the client or server of the sender, and the IP address of the fund management server obtained from the DNS server is considered the IP address of the receiver fund management server. Those skilled in the art, based on the descriptions of the realizing functions, may also consider the client as the client or server of the sender, or the client or server of the receiver correctly, and may consider the fund management server as the sender fund management server or the receiver fund management server correctly.

Specifically, in the present embodiment, the resource record that has a mapping relationship to the IP address of the fund management server is configured into the DNS server based on the RFC-1035 standard; in real-world development, the resource record that has a mapping relationship to the IP address of the fund management server is configured as below:
1) the format of the resource record that has a mapping relationship to the IP address of the fund management server is configured to be the same as the format of an MX resource record in the DNS server.
   To facilitate the descriptions, in the present embodiment, the resource record that has a mapping relationship to the IP address of the fund management server is called a CX resource record, i.e., Currency Exchanger, which has the functionalities and format similar to the MX type but is mainly used to specify the domain name of the fund management server while cooperating with the A resource record to provide the corresponding IP address.
   According to the RFC-1035 standard, the length of TYPE in the resource record is 2 bytes, i.e., up to 2^16=65536 resource types. However, there are currently no more than 100 resource types in use, so there is enough space to add the new CX resource type, and the code for the CX resource type may be any unused code, such as 50.
   The CX resource record (RR) should conform to the standard definitions for the DNS resource record, which specifically includes the following contents:
   name (NAME);
   type (TYPE);
   class (CLASS);
   time to live (TTL);
   resource data length (RDLENGTH);
   resource data (RDATA);
   the RDATA format of the CX resource record is the same as the MX type, but has differences in functions, wherein related contents and functions are described as below:
      preference (PREFERENCE): same as the corresponding fields of the MX type;
      exchange (EXCHANGE): with basic functions same as the corresponding fields of the MX type, but the returned domain name points to a fund management server instead of an e-mail exchange server.
2) the format of the resource record that has a mapping relationship to the IP address of the fund management server is configured to be the same as the format of a TXT resource record in the DNS server.
3) the resource record that has a mapping relationship to the IP address of the fund management server is further configured to be in the MX resource record in the DNS server.

In this case, the IP to which the MX resource record points has the functionalities of both an e-mail exchange server and a fund management server. The client leverages the corresponding network protocols to perform e-mail exchange and/or value transfer to the server through the same IP.

In order to be distinguished from a mailbox address, in the present embodiment, a new address encoding format is introduced to align with the CX resource type (or a "wallet address", the same as below), such as "abcd#domain.com". The new address encoding format should generally be different from the MX type in order to distinguish it from the mailbox address "abcd@domain.com". Therefore, the client may further parse the wallet address to further interact with the DNS server and the fund management server to perform value transfer accordingly. Herein "abed" is the local name, and "domain.com" is the domain name. However, the new address encoding format is not a limitation, and the querying party may also query the required content according to its own situation even if it is based on e-mail address rather than wallet address. In order to be distinguished from the "mailbox" address name in RFC-5322, the address name of the CX resource type may be "wallet".

Through the above ideas, those skilled in the art may further configure the resource record that has a mapping relationship to the IP address of the fund management server in other fields, and the specific methods of configuring the resource record in the DNS server are not limited by the present embodiment.

Since the DNS server performs record updates and queries mainly through related databases, the updates and queries for the newly-added parameters may generally be realized by adding the resource record to the databases of primary DNS servers and secondary DNS servers in DNS zones (root zones and/or sub-zones).

The client queries the DNS server by:
for a wallet address or an e-mail address, the client may typically query the DNS server in the following order to obtain the IP address of the fund management server:
   1) if there is a CX resource record in the DNS server, obtaining the required domain name of the fund management server through the CX resource record and obtaining the corresponding IP address through the A resource record, and further trying to access the digital/electronic currency server applications running on that IP address;
   2) if there is not a CX resource record, but there is a TXT resource record with a specific format in the DNS server, obtaining the domain name or the IP address of the fund management server through the TXT resource record, and further trying to access the digital/electronic currency server applications running on that IP address;
   3) if there is neither a CX resource record nor a TXT resource record with a specific format in the DNS server, obtaining the corresponding domain name or the IP address through other fields such as an MX resource record, and further trying to access the digital/electronic currency server applications running on that IP address.

The querying method may also be similar to some protocols such as SMTP, referring to RFC-5321.

In real-world application, the currency exchange and binding performed through the CX resource record may be realized in various ways; for example, the client first queries the CX resource record and the A resource record from the DNS server according to the domain name of the remittance address to obtain the domain name and the IP address of the fund management server, and then interacts with the fund management server to complete operations such as remittance and query.

Due to a large number of different types of digital/electronic currency interface protocols at present, in the present embodiment, a unified interface protocol is introduced into the fund management server to simplify the interaction process, wherein the client may interact with the fund management server through the unified interface protocol after obtaining the IP address of the fund management server by querying the DNS server to further complete the tasks such as remittance and query; therefore, the complexity of client/server terminal software may be simplified, unnecessary resource consumption may be reduced, and the security may be enhanced, etc.

Further, to facilitate interaction and resource-saving, the unified interface protocol will use a few specified ports, such as 35, similar to some protocols such as SMTP.

In the present embodiment, the unified interface protocol may have the following ways of working:
1) the unified interface protocol allows client requests to be internally dispatched and to complete operations such as remittance and query through the corresponding digital/electronic currency protocols, wherein the internal dispatch may be realized by invocations such as RPC; in this way, the client only needs to interact with the unified interface protocol without the involvement of third-party payment protocols or digital currency protocols.
2) the unified interface protocol may convert the wallet/e-mail addresses in the client's requests into the corresponding third-party payment account information or digital currency addresses and feed the same back to the client. So that the client may perform the operations such as remittance and query directly through digital/electronic currency protocols.

After the corresponding remittance operations are completed through the unified interface protocol in the fund management server, the unified interface protocol generates a specific transaction number within the protocol and returns the same to the client.

It should be noted that although the unified interface protocol may convert the wallet/e-mail addresses into the corresponding third-party payment account or digital currency addresses according to the client's requests, it is not part of the DNS protocol itself, because the corresponding account ID or digital currency address exists in a server specific to the operator of the domain name instead of the global DNS service network.

To prevent stealing or tampering in the process of remittance, the value transfer system of the present embodiment further ensures the reliability of communication and remittance processes and the authenticity of identity/sources through certain security and authentication mechanisms; for example, during the transfer process, the remittance transfer needs to be secured and the source is ensured to be authentic with the help of encryption and digital certificates.

Therefore, the value transfer system based on the DNS domain name system provided by the present application has the following features:
1) By configuring the resource record that has a mapping relationship to the IP address of the fund management server into the DNS server, the DNS has a value-network-oriented functionality to transfer value for the users reliably and conveniently.
2) With the consideration of the popularity of e-mails, the format of the resource record introduced by the present invention is close to the pattern of the MX resource record for e-mails, and a new wallet address with the format close to an e-mail address is also introduced.
3) In order to solve the problem of interface inconsistency caused by a large number of existing third-party payments and digital currency protocols, the present invention introduces a unified interface protocol to the fund management server, and further extends related solutions (such as remittance mail).

Through the above value transfer system, a user may perform cross-platform remittance directly via a wallet address or an e-mail address related to a domain name without entering a complicated receipt address or account ID, thereby greatly improving the reliability and efficiency of remittances/receipts. On the other hand, since each of the domain names has WHOIS records containing real information and data of the domain name owners, registrars, and the relevant personnel, real-name authentication can be achieved through wallet or email addresses for remittance bound to the domain names, thereby obtaining necessary legal support and supervision. Meanwhile, due to the introduction of privacy protection laws such as GDPR, WHOIS information related to domain names is generally not disclosed, and is only disclosed to relevant personnel or institutions when necessary, such as being involved in judicial investigations; therefore, good privacy protection characteristic and limited anonymity may be achieved.

### Embodiment two:

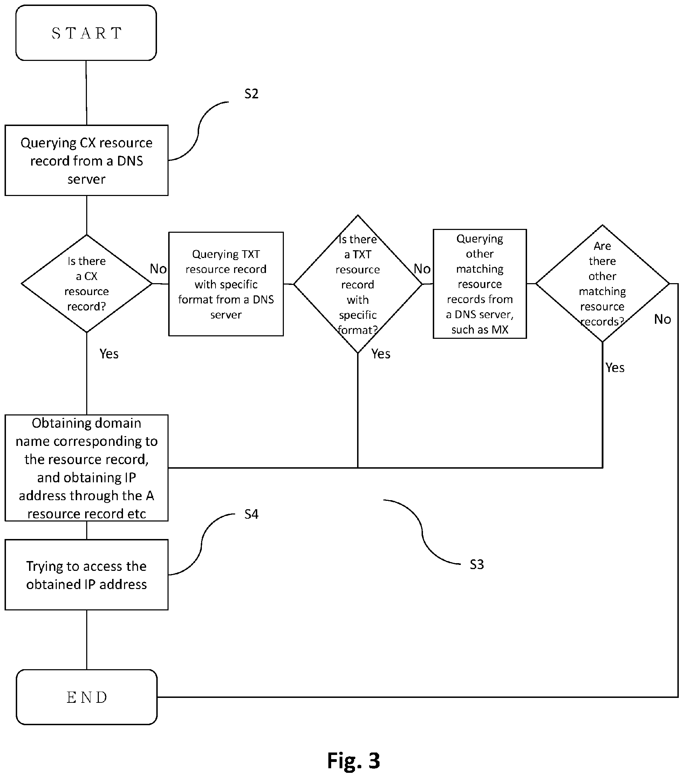

Based on Embodiment one, the present embodiment provides a value transfer method based on the DNS domain name system, which specifically includes the following steps, with the flowchart shown in Fig. 3:
Step S1: a resource record related to a fund management server is configured into a DNS server.

In other words, the resource record related to the receiver fund management server is configured into the DNS server.

The fund management server leverages network protocols for value transfer, which includes, but not limited to, digital currency and electronic currency; the resource record is a resource record that has a mapping relationship to the IP address of the fund management server.

In the present embodiment, the resource record that has a mapping relationship to the IP address of the fund management server is configured into the DNS server based on the RFC-1035 standard, which specifically includes the following configuration methods:
1) the format of the resource record that has a mapping relationship to the IP address of the fund management server is configured to be the same as the format of an MX resource record in the DNS server.
2) the format of the resource record that has a mapping relationship to the IP address of the fund management server is configured to be the same as the format of a TXT resource record in the DNS server.
3) the resource record that has a mapping relationship to the IP address of the fund management server is further configured to be in the MX resource record in the DNS server.

The above three configuration methods can be specifically referred to in Embodiment one, and they will not be repeated here. Through the above ideas, those skilled in the art may further configure the resource record that has a mapping relationship to the IP address of the fund management server in other fields, and the specific methods of configuring the resource record in the DNS server are not limited by the present embodiment.

Step S2: the DNS server receives query requests for the resource record from a client.

In other words, the DNS server receives the query requests for the resource record from the sender client.

Step S3: the DNS server resolves the resource record to the IP address of the fund management server and feeds the IP address back to the client if the resource record exists.

In other words, the DNS server resolves the resource record to obtain the IP address of the receiver fund management server and feeds the IP address of the receiver fund management server back to the sender client.

Step S4: the fund management server performs the corresponding value transfer according to the IP address-based requests from the client.

In other words, the sender fund management server interacts with the receiver fund management server according to the IP address of the receiver fund management server to perform the corresponding value transfer.

Therefore, through the steps S2-S4, the value transfer between the sender and the receiver can be completed.

The present embodiment further includes a step of configuring a unified interface protocol in the fund management server so that the client interacts with the fund management server through the unified interface protocol according to the IP address to realize the corresponding value transfer; the unified interface protocol may internally dispatch client requests and complete the corresponding value transfer through corresponding digital/electronic currency protocols, or the unified interface protocol may convert the wallet/e-mail addresses in the client's requests into the corresponding third-party payment account information or digital currency addresses and feed the same back to the client.

The value transfer method of the present embodiment has the following features:
1) By configuring the resource record that has a mapping relationship to the IP address of the fund management server into the DNS server, the DNS has a value-network-oriented functionality to transfer value for the users reliably and conveniently.
2) With the consideration of the popularity of e-mail, the format of the resource record introduced by the present invention is close to the pattern of the MX resource record for e-mails, and a new wallet address with the format close to an e-mail address is also introduced.
3) In order to solve the problem of interface inconsistency caused by a large number of existing third-party payments and digital currency protocols, the present invention introduces a unified interface protocol to the fund management server, and further extends related solutions (such as remittance mail).

Through the above value transfer method, a user may perform cross-platform remittance directly via a wallet address or an e-mail address related to a domain name without entering a complicated receipt address or account ID, thereby greatly improving the reliability and efficiency of remittances/receipts. On the other hand, since each of the domain names has WHOIS records containing real information and data of the domain name owners, registrars, and the relevant personnel, real-name authentication can be achieved through wallet or email addresses for remittance bound to the domain names, thereby obtaining necessary legal support and supervision. Meanwhile, due to the introduction of privacy protection laws such as GDPR, WHOIS information related to domain names is generally not disclosed, and is only disclosed to relevant persons or institutions when necessary, such as being involved in judicial investigations; therefore, good privacy protection characteristic and limited anonymity may be achieved.

### Embodiment three:

The present embodiment provides a DNS server, which can support value-network-oriented resource record to resolve value-related server domain names and IPs.

The schematic diagram of the DNS server in the present embodiment is shown in Fig. 4, and the DNS server includes a configuration module, a receiving module, and a processing module.

The configuration module is used to configure a resource record related to a fund management server into a DNS server, wherein the resource record is a resource record that has a mapping relationship to the IP address of the fund management server;
the receiving module is used to receive the query requests for the resource record for the fund management server from the client; and
the processing module is used to query whether there exists a corresponding resource record in a database or a buffer according to the query requests, and if yes, resolve the resource record to the IP address of the fund management server and feed the IP address back to the client.

Therefore, the IP address of the fund management server may be obtained by querying the resource record from the DNS server, and the corresponding remittance operations may be performed by trying to access the digital/electronic currency server applications running on that IP address.

Specifically, the configuration module configures the resource record that has a mapping relationship to the IP address of the fund management server into the DNS server based on the RFC-1035 standard, which specifically includes the following configuration methods:
1) the configuration module configures the format of a resource record that has a mapping relationship to the IP address of the fund management server to be the same as the format of an MX resource record in the DNS server.
2) the configuration module configures the format of a resource record that has a mapping relationship to the IP address of the fund management server to be the same as the format of a TXT resource record in the DNS server.
3) the configuration module further configures the resource record that has a mapping relationship to the IP address of the fund management server to be in the MX resource record in the DNS server.

The above three configuration methods can be specifically referred to in Embodiment one, and they will not be repeated here. Through the above ideas, those skilled in the art may further configure the resource record that has a mapping relationship to the IP address of the fund management server in other fields through the configuration module, and specific methods of configuring the resource record in the DNS server are not limited by the present embodiment.

### Embodiment four:

The present embodiment provides a remittance method by e-mail, wherein the e-mail interface includes remittee information, remittance method, amount and type of currency;
the remittee information includes the following types:
   wallet address of the remittee;
   e-mail address of the remittee;
   digital currency address of the remittee;
   name corresponding to the digital currency address of the remittee;
   account and service provider bound to the digital currency or the electronic currency of the remittee;
   name corresponding to both the account and the service provider bound altogether to the digital currency or the electronic currency of the remittee;
   the remittance method includes ordinary remittance method and/or DNS direct remittance method;
   the type of currency is digital currency or/and electronic currency;
   the remittance method by e-mail in the present embodiment includes steps of:
      detecting whether the remittee information contains the wallet address of the remittee or the e-mail address of the remittee, wherein if yes, the remittance is performed in the DNS direct remittance method; if not, the remittance is performed in the ordinary remittance method.

In the present embodiment, the ordinary remittance method is used for remittance when the remittee information is detected for the following types:
the remittee information is a digital currency address of the remittee; the remittee information is a name corresponding to the digital currency address of the remittee;
the remittee information is an account and a service provider bound to the digital currency or the electronic currency of the remittee;
the remittee information is a name corresponding to both the account and the service provider bound altogether to the digital currency or the electronic currency of the remittee.

For specific methods of realizing corresponding ordinary remittance by e-mail in the present embodiment, please refer to the patent titled "CURRENCY-PROTOCOL-CONVERGED E-MAIL SYSTEM, AND E-MAIL SENDING AND RECEIVING METHODS THEREFOR" with a patent application No. 201910092306.7. The remittance method by e-mail in the present embodiment is a corresponding improvement based on the above patent, and it introduces the DNS direct remittance method as the improvement, i.e., the DNS server is added for value transfer. For the specific ordinary remittance method involved in the present embodiment, please refer to the remittance method involved in "an e-mail sending method for currency-protocol-converged e-mail system" provided by Embodiment Four in the above patent correspondingly, which will not be repeated in the present embodiment for simplifying the specification. The present embodiment mainly introduces the DNS direct remittance method in the e-mail system.

The DNS direct remittance method is specifically: querying the IP address of the fund management server from the DNS server according to the domain name of a wallet address or an e-mail address, wherein the DNS server is configured with the resource record that has a mapping relationship to the IP address of the fund management server; interacting with the fund management server to perform the remittance operations according to the obtained IP address.

Exemplarily, when a user enters a wallet address " abcd#domain.com" through the client, the address format is parsed by the client. For example, for "abcd#domain.com", the client first determines it to be a wallet address by "#", then intercepts the string "domain.com" after "#" to obtain the domain name, and further queries the CX record containing the "domain.com" domain name from the DNS server and obtains an IP, and finally accesses the fund management server through the IP.

It should be noted that regardless of whether it is DNS direct remittance or ordinary remittance, the remittance mail can always be sent to the remittee simultaneously when the remittance is performed. In the present embodiment, the order for the remittance mail and the actual remittance operations is not specifically defined, e.g., the remittance mail may be sent after the remittance operations are completed, or the remittance mail may be sent before the remittance operations are completed.

Further, in the present embodiment, a step of displaying the remittance identifier in the remittance mail is included, wherein specifically, the remittance identifier may be displayed in the e-mail header or/and the e-mail body of the remittance mail, or an auxiliary e-mail is sent in which the remittance identifier is displayed so that the remittee may identify whether the corresponding e-mail is a remittance mail through the remittance identifier.

Through the introduction of the DNS direct remittance method in the e-mail system, the e-mail system has a variety of remittance methods. The following example provides the remittance method by e-mail related to the DNS direct remittance method.

The first remittance method: DNS direct remittance method

In this remittance method, an e-mail system interface includes one or more sets of the fields as below:
"remittee address": only wallet address or mailbox address, or the corresponding address book name, e.g., "abcd#domain.com" or "abcd@domain.com". Here "abed" is the local name, and "domain.com" is the domain name. Regardless of the type of address, the client will always query through the DNS server to obtain the IP address of the fund management server, even if the remittee address is a mailbox address.
"amount": required amount for remittance;
"unit": required unit for remittance. This field is optional if the remittee address contains similar information.
"service provider": third-party payment service provider where the remittee is located. If it is a digital currency, this field can be left empty. This field is optional and, together with "remittee address", this field can be bound to a certain address book name.

Correspondingly, the format of the DNS direct remittance field is:
<is it a DNS direct remittance?> [[remittee name of the DNS direct remittance] <remittee address of the DNS direct remittance> <is there a transaction number of the DNS direct remittance?> [transaction number of the DNS direct remittance]]

The format of the header of the DNS direct remittance field in a remittance mail is:
Pay-To: [remittee name] <remittee address> <amount> <unit> <is there a transaction number?> [transaction number] [service provider identifier] [DNS direct remittance field];
For example,
/Pay-To: <1A1zP1eP5QGefi2DMPTfTL5SLmv7DivfNa> 50 BTC true 4a5ele4baab89f3a32518a88c31bc87f618f76673e2cc77ab2127b7afdeda3 3b true "dnspay" <dnspay@domain.com> true dnstxid1/ ;
Here "//" is used to distinguish the complete "Pay-To" header, while the "//" character itself does not belong to the "Pay-To" header.

Through the configuration of the above fields, the process of the DNS direct remittance is as follows:
Step 1: the system queries the IP address of the fund management server from the DNS server according to the domain name of the remittee address;
Step 2: the system obtains the returned IP address, and further accesses the fund management server;
Step 3: the system interacts with the fund management server to complete the remittance.

Since the fund management server has the unified interface protocol, it may adapt to different types of digital/electronic currency interface protocols, and the specific interaction methods based on the unified interface protocol are as follows:
The first interaction method:
   1) the system sends information such as local name and service provider to the fund management server through the unified interface protocol, and correspondingly obtains the actual local or the third-party payment account information or the digital currency address, etc.;
   2) the system remits to the third-party payment account or the digital currency address according to the amount, the unit and the service provider.

The second interaction method:
1) the system sends information such as local name and service provider to the fund management server through the unified interface protocol;
2) the fund management server obtains a newly-set or pre-set intermediate account for the local or the third-party payment, and sends the intermediate account information to the user system;
3) the system remits the fund management server according to the amount, the unit and the obtained intermediate account information;
4) the fund management server remits to the actual local or the third-party payment account or the digital currency address.

Since the fund management server of the remittee plays the role of third-party payment (or fourth-party payment) at this time, the system will obtain the transaction number from the fund management server of the remittee through the unified interface protocol, rather than the actual digital currency transaction number or third-party payment transaction number. The second remittance method:
In this remittance method, the e-mail system interface includes one or more groups of fields as below:
   "remittee address": add "wallet address" and the corresponding address book name.
   "service provider": third-party payment service provider where the remittee is located, left empty if it is for digital currency.

Newly-added "remittance method" field: "ordinary remittance" or "DNS direct remittance".

If it is "ordinary remittance", the remittance is performed in the remittance method of the patent with application No. 201910092306.7; if it is "DNS direct remittance", the remittance is performed in the first remittance method, i.e., performing remittance by querying the DNS. If the remittee address is a "wallet address", the "remittance method" can only be "DNS direct remittance". If the remittee address is an "e-mail address", the "remittance method" can be either "ordinary remittance" or "DNS direct remittance".

The specific remittance process for the second remittance method is similar to the remittance flow in the "first remittance method" if the remittance method is "DNS direct remittance". Then, before sending the remittance mail, the system accesses the designated fund management server through the DNS server and obtains the actual third-party account, the digital currency address or the intermediate account information as well as the remittance ID generated by the fund management server of the remittee according to the remittee address and the service provider, and puts the related information into the extended header field of the remittance mail, the body of the remittance mail, or an auxiliary e-mail. Actual remittance is performed after the remittance mail is sent, and both the receiver and the sender are informed of the remittance.

In this way, the user should provide the remittee address (i.e., "digital currency address", "third-party payment account", "wallet address" or the corresponding address book name), the amount, the unit, the service provider, and the remittance method, etc.

The third remittance method:
In this remittance method, the "remittee address" in the e-mail system interface is only the wallet address or the mailbox address, or the corresponding address book name, without the "remittance method" field; Only DNS direct remittance method is used within the system.

Specifically, the remittance flow is: the system remits to the remittee address only using the "DNS direct remittance" method through DNS query. It does not support the user to remit directly through the third-party account or digital/electronic currency address, but still enables the user to select the appropriate service provider. In this way, the user only needs to provide the wallet address or the mailbox address of the remittee, the amount, the unit and the service provider.

The fourth remittance method:
In this remittance method, the e-mail system interface does not have a "service provider" field, and internally just based on the unit, the system remits the digital currency, or remits the electronic currency of a certain third-party payment service provider.

Specifically, the remittance flow is: according to the unit, the system remits the digital currency, or remits the electronic currency of a certain third-party payment service provider, to the remittee address only using the "DNS direct remittance" method by querying the DNS. In this method, the user only needs to provide the remittee address, the amount, and the unit. The fifth remittance method:
The e-mail system interface in this remittance method is as follows:
   "remittee address": only mailbox address or corresponding wallet address of the receiver (both have the same local name and domain name), or the corresponding address book name. Since the field cannot be modified, it can be read-only or hidden directly on the interface. Each receiver (including CC/BCC) has the field correspondingly.
   "amount": each receiver (including CC/BCC) has the field correspondingly.
   "unit": each receiver (including CC/BCC) has the field correspondingly.

Specifically, the remittance flow is: the system remits the receiver/the remittee the remittance items only using the "DNS direct remittance" method. In this way, the user only needs to provide the amount and the unit for each receiver.

The foregoing uses particular examples to explain the present invention and is only to help understand the present invention but not to limit the present invention. For those skilled in the art to which the present invention belongs, according to the idea of the present invention, several simple deductions, modifications or substitutions can also be made.

## Claims

1. A value transfer system based on the Domain Name System (DNS), comprising:
a fund management server, leveraging network protocols to transfer value that includes, but not limited to, digital currency and electronic currency;
a DNS server, configured with a resource record that has a mapping relationship to the IP address of the fund management server, wherein when a client queries the resource record through the DNS server, the DNS server resolves the resource record to obtain the IP address of the fund management server and feeds the IP address back to the client so that the client interacts with the fund management server according to the IP address for the corresponding value transfer.

2. The value transfer system according to claim 1, wherein the resource record that has the mapping relationship to the IP address of the fund management server is configured in the DNS server based on the RFC-1035 standard.

3. The value transfer system according to claim 2, wherein the format of the resource record that has the mapping relationship to the IP address of the fund management server is configured to be the same as the format of an MX resource record in the DNS server, or to be the same as the format of a TXT resource record in the DNS server.

4. The value transfer system according to claim 2, wherein the resource record that has the mapping relationship to the IP address of the fund management server is further configured into the MX resource record in the DNS server.

5. The value transfer system according to claim 1, wherein the client may further parse the wallet address having an encoding format that is different from the encoding format of email address to further interact with the DNS server and the fund management server for the corresponding value transfer.

6. The value transfer system according to any one of claims 1 to 5, wherein the fund management server has a unified interface protocol, and the client interacts with the fund management server according to the IP address through the unified interface protocol to realize the corresponding value transfer.

7. The value transfer system according to claim 6, wherein the unified interface protocol may internally dispatch client requests and complete the corresponding value transfer through corresponding digital/electronic currency protocols, or the unified interface protocol may convert the wallet/e-mail addresses in the client's requests into the corresponding third-party payment account information or digital currency addresses and feed the same back to the client.

8. A value transfer method based on the Domain Name System (DNS), comprising steps of:
configuring a resource record related to a fund management server into a DNS server, wherein the fund management server leverages network protocols to transfer value that includes, but not limited to, digital currency and electronic currency; the resource record is a resource record that has a mapping relationship to the IP address of the fund management server;
receiving, by the DNS server, query requests for the resource record from a client;
resolving, by the DNS server, the resource record to the IP address of the fund management server and feeding the IP address back to the client if the resource record exists; and
performing, by the fund management server, the corresponding value transfer according to the IP address-based requests from the client.

9. The value transfer method according to claim 7, wherein the resource record that has the mapping relationship to the IP address of the fund management server is configured into the DNS server based on the RFC-1035 standard.

10. The value transfer method according to claim 8, wherein the format of the resource record that has the mapping relationship to the IP address of the fund management server is configured to be the same as the format of an MX resource record in the DNS server, or to be the same as the format of a TXT resource record of the DNS server.

11. The value transfer method according to claim 8, wherein the resource record that has the mapping relationship to the IP address of the fund management server is further configured into the MX resource record in the DNS server.

12. The value transfer method according to claim 8, wherein the client may further parse the wallet address having an encoding format that is different from the encoding format of email address to further interact with the DNS server and the fund management server to perform corresponding value transfer.

13. The value transfer method according to any one of claims 8 to 12, further comprising a step of configuring a unified interface protocol in the fund management server, so that the client interacts with the fund management server according to the IP address through the unified interface protocol to realize the corresponding value transfer.

14. The value transfer method according to claim 13, wherein the unified interface protocol may internally dispatch client requests and complete the corresponding value transfer through corresponding digital/electronic currency protocols, or the unified interface protocol may convert the wallet/e-mail addresses in the client's requests into the corresponding third-party payment account information or digital currency addresses and feed the same back to the client.

15. A DNS server, comprising:
a configuration module, used to configure a resource record related to a fund management server into a DNS server, wherein the resource record is a resource record that has a mapping relationship to the IP address of the fund management server;
a receiving module, used to obtain the query requests for the resource record for the fund management server from a client; and
a processing module, used to query whether there exists a corresponding resource record in a database or a buffer according to the query requests, and if yes, resolve the resource record to the IP address of the fund management server and feed the IP address back to the client.

16. The DNS server according to claim 15, wherein the configuration module configures the resource record that has the mapping relationship to the IP address of the fund management server into the DNS server based on the RFC-1035 standard.

17. The DNS server according to claim 16, wherein the configuration module configures the format of the resource record that has the mapping relationship to the IP address of the fund management server to be the same as the format of an MX resource record in the DNS server, or to be the same as the format of a TXT resource record of the DNS server.

18. The DNS server according to claim 16, wherein the configuration module further configures the resource record that has the mapping relationship to the IP address of the fund management server into an MX resource record in the DNS server.

19. A remittance method by e-mail, wherein an e-mail interface comprises remittee information, remittance method, amount and type of currency;
the remittee information comprises:
wallet address of the remittee;
e-mail address of the remittee;
digital currency address of the remittee;
name corresponding to the digital currency address of the remittee;
account and service provider bound to the digital currency or the electronic currency of the remittee;
name corresponding to both the account and the service provider bound altogether to the digital currency or the electronic currency of the remittee;
the remittance method comprises ordinary remittance method and/or DNS direct remittance method;
the type of currency is digital currency or/and electronic currency;
the remittance method by e-mail comprises steps of:
detecting whether the remittee information contains the wallet address of the remittee or the e-mail address of the remittee, wherein if yes, the remittance is performed in the DNS direct remittance method; if not, the remittance is performed in the ordinary remittance method.

20. The remittance method by e-mail according to claim 19, wherein the DNS direct remittance method specifically comprises:
querying the IP address of the fund management server from the DNS server according to the domain name of the wallet address or the e-mail address, wherein the DNS server is configured with the resource record that has a mapping relationship to the IP address of the fund management server; and
interacting with the fund management server to complete a remittance operation according to the obtained IP address.

21. The remittance method by e-mail according to claim 19, further comprising a step of sending a remittance mail: sending the remittance mail after the remittance operation is completed, or sending the remittance mail before the remittance operation.

22. The remittance method by e-mail according to claim 21, further comprising a step of displaying the remittance identifier: displaying the remittance identifier in the e-mail head or/and the e-mail body of the remittance mail, or sending an auxiliary e-mail in which the remittance identifier is displayed.
